# EUROPÄISCHE PATENTANMELDUNG

(11) **EP 1 923 411 A2**
(43) Veröffentlichungstag der Anmeldung: **21.05.2008**
(21) Anmeldenummer: 07021521.5
(22) Anmeldetag: 06.11.2007
(51) Int. Cl.: C08G 18/08, C08G 18/12, C08G 18/42, C08G 18/66, C08G 18/72, C08G 18/75, C08G 18/76, C09D 175/02, C09D 175/14

(54) **Polyurethan-modifizierte Alkydharzdispersionen**

(30) Priorität: 17.11.2006 DE 102006054237
(71) Anmelder: Bayer MaterialScience AG, 51368 Leverkusen (DE)
(72) Erfinder: Blum, Harald, Dr., 51375 Leverkusen (DE); Gertzmann, Rolf, Dr., 51377 Leverkusen (DE); Irle, Christoph, Dr., 41539 Dormagen (DE); Guiteras, Maria Almato, 08032 Barcelona (ES); Martinez, Juan Miguel Garcia, 08030 Barcelona (ES)

(57) **Zusammenfassung**

Die Erfindung betrifft neue wässrige Polyurethan-modifizierte Alkydharzdispersionen, deren Herstellung und Verwendung als Bindemittel in Lacken und Beschichtungen.

## Beschreibung

Die Erfindung betrifft neue wässrige Polyurethan-modifizierte Alkydharzdispersionen mit Urethan- und Harnstoffgruppen, deren Herstellung und Verwendung als Bindemittel in Lacken und Beschichtungen.

Bekannt sind aus der US-P 4,116,902 Polyurethan-modifizierte, wasserverdünnbare Alkydharze, die das Hydrophilierungsmittel Dimethylolpropionsäure in das Alkydharz einkondensiert enthalten. Eine Kettenverlängerung findet nicht statt. Nachteilig ist hierbei einerseits eine, durch die räumliche Nähe von Estergruppen und Carboxylatgruppen bedingte erhöhte Hydrolyseanfälligkeit der Dispersion, andererseits geht eine nicht unerhebliche Menge an Dimethylolpropionsäure durch Veresterungsreaktionen verloren. Weiterhin ist aus heutiger Sicht der sehr hohe Bedarf an organischen Lösemitteln inakzeptabel.

US-P 5,319,052 offenbart spezielle oxidativ vernetzbare Urethanharze für Druckfarben, die Umsetzungsprodukte von Alkydharzen mit Isocyanaten und Hydroxycarbonsäuren enthalten. Die Urethanharze weisen relativ hohe Säurezahlen von bis zu 50 mg KOH/g Substanz auf, was bei einer Verwendung in Beschichtungen zu einer hohen Wasserempfindlichkeit führt. Aufgrund der hohen Mengen an hochsiedenden Mineralölen, in denen die Urethanharze gelöst sind, sind die beschriebenen Produkte insbesondere für Lack und Beschichtungsanwendungen die bei Raumtemperatur trocknen müssen völlig ungeeignet.

In der DE-A 199 30 961 werden wässrige Polyurethandispersionen beschrieben, die bestimmte Umesterungsprodukte von Rizinusöl mit ungesättigten Fettsäuren oder ungesättigten Ölen enthalten. Diese Produkte weisen relativ hohe Gehalte an halbtrocknenden Ölen, wie z.B. Rizinusölfettsäure auf, die keine oder nur einen sehr geringen Beitrag zur oxidativen Vernetzung leisten.

DE-A 195 02 084 offenbart wässrige Dispersionen auf Basis von hydroxy- und carboxyfunktionellen Poly(meth)acrylaten, fettsäuremodifizierten Polyestern und Diisocyanaten. Die Produkte sind in ihrer Fähigkeit zur oxidativen Vernetzung stark limitiert, zeigen auf Holz nur eine durchschnittlich gute Filmbildung und Anfeuerung und sind zudem relativ kompliziert und aufwändig in der Herstellung. Den Bedarf nach unkomplizierten, kostengünstigen Alkydharzdispersionen zur Herstellung von qualitativ hochwertigen Beschichtungen und Lacken, insbesondere für Holz, Möbel, Parkett, hölzerne Fensterrahmen und Türen, können sie nicht decken.

In der EP-A 0 729 991 werden wässrige Polyester-Polyurethane beschrieben, die gegebenenfalls auch zur oxidativen Trocknung befähigte Gruppen enthalten können. Wesentliche Aufbaukomponente ist dabei 1-Methyl-2,4 und/oder 2,6-diisocyanatohexan. Die Produkte sind relativ niedermolekular und enthalten noch organische Lösemittel, insbesondere NMP bzw. Xylol und genügen somit nicht mehr den heutigen Anforderungen. Darüber hinaus ist die Trocknung bei Raumtemperatur für einige Anwendungen nicht ausreichend schnell bzw. die Filmhärte zu niedrig.

EP-A 0 379 007 offenbart wässrige, oxidativ trocknende Alkydharzdispersionen, die allerdings hydroxyfunktionell und niedermolekular sind. Eine Kettenverlängerungsreaktion mit Di- bzw. Polyaminen wird nicht durchgeführt. Das Eigenschaftsniveau ist insgesamt gut, die Produkte enthalten jedoch Lösemittel und entsprechende Beschichtungen trocknen relativ langsam.

In der EP-A 1 026 186 werden oxidativ trocknende Polyurethan-Dispersionen auf Basis von Umesterungsprodukten von trocknenden Ölen und niedermolekularen Polyolen, hochmolekularen Polyolen, Hydrophilierungsmitteln mit anionischen oder kationischen Gruppen und Polyisocyanaten, sowie kettenabbrechenden oder kettenverlängernden Verbindungen beschrieben. Die Dispersionen enthalten relativ hohe Mengen an NMP und benötigen relativ lange zur Trocknung.

Aufgabe der vorliegenden Erfindung bestand somit in der Bereitstellung neuer Alkydharzdispersionen, die sich in einfacher Weise und aus kostengünstigen Rohstoffen herstellen lassen. Darüber hinaus sollten sie sich zur Herstellung qualitativ hochwertigen Beschichtungen und Lacken, insbesondere für Holz, Möbel, Parkett, hölzerne Fensterrahmen und Türen eignen.

Diese Aufgabe wird durch die erfindungsgemäßen Polyurethan(PUR)-Alkydharzdispersionen gelöst. Die erfindungsgemäßen Dispersionen können nahezu frei von organischen Lösemitteln, insbesondere ohne N-Methylpyrrolidon, hergestellt werden. Die erfindungsgemäßen Alkydharzdispersionen enthalten maximal 5 Gew.-%, bevorzugt weniger als 1 Gew.-% organische Lösungsmittel und kein N-Methylpyrrolidon. Weiterhin liefern die erfindungsgemäßen Alkydharzdispersionen Lacke und Beschichtungen, die sich durch eine sehr gute Filmbildung und insbesondere Anfeuerung von Untergründen, bevorzugt von Holz bzw. Holzwerkstoffen, auszeichnen und über eine ausgezeichnete Wasser- und Ethanolbeständigkeit verfügen.

Gleichzeitig betragen die Trocknungszeiten etwa 2 Stunden oder weniger bei Raumtemperatur, die Beschichtungen weisen Filmhärten größer 75, bevorzugt größer 100 Pendelsekunden auf und zeigen eine ausgezeichnete black heel mark resistance (Schuhsohlenabriebbeständigkeit) und ein sehr gutes Elastizität-Härte-Verhältnis.

Die im Folgenden genannten Prozentzahlen der einzelnen Komponenten ergänzen sich immer zu 100 Gew.-%.

Gegenstand der vorliegenden Erfindung sind wässrige Polyurethan(PUR)-Alkydharzdispersionen, enthaltend Umsetzungsprodukte von
a) mindestens einem Alkydharz, welches mindestens 40 Gew.- % zur oxidativen Vernetzung mit Luftsauerstoff befähigten Fettsäuren eingebaut enthält,
b) mindestens einem, mindestens difunktionellen Polyisocyanat,
c) mindestens einem carboxy-/carboxylatfunktionellen und hydroxy- oder aminofunktionellen Hydrophilierungsmittel,
d) gegebenenfalls Diole und/oder Triole des Molekulargewichtsbereiches 62 bis 600 und
e) mindestens einem Diamin, gegebenenfalls in Kombination mit einem Triamin und/oder Aminoalkohol und
f) gegebenenfalls andere von a) bis e) verschiedene Komponenten.

Die erfindungsgemäßen wässrigen PUR-Alkydharzdispersionen weisen ein Verhältnis von Fettsäuregruppen (MG 280 g/Mol) zu Urethangruppen (MG 59 g/Mol) von 1: 1,5 bis 4,5, bevorzugt von 1: 2,2 bis 3,3 auf.

Das in den erfindungsgemäßen wässrigen PUR-Alkydharzdispersionen als Aufbaukomponente enthaltene Alkydharz a) weist eine Säurezahl von 6 bis 1 mg KOH/g, bevorzugt von 4 bis 1,5 mg KOH/g, besonders bevorzugt von 3 bis 2 mg KOH/g auf und ist ein Umsetzungsprodukt aus
a1) mindestens einer Di- und/oder Tricarbonsäure bzw. deren Anhydrid, bevorzugt eine Mischung aus a11) mindestens einer aromatischen Dicarbonsäure bzw. deren Anhydrid und a12) mindestens einer linearen, aliphatischen Dicarbonsäure,
a2) mindestens einem Di-, Tri- und/oder Tetraol, bevorzugt mindestens einem Triol,
a3) mindestens einer Monocarbonsäure, bestehend zu mindestens 90 Gew.-%, bevorzugt 100 Gew.-% aus Fettsäuren, die zur oxidativen Vernetzung mit Luftsauerstoff befähigte Doppelbindungen enthalten.

Die erfindungsgemäßen wässrigen PUR-Alkydharzdispersionen, enthalten Umsetzungsprodukte von 35 bis 75 Gew.-%, bevorzugt von 42 bis 64 Gew.-% der Komponente a), von 18 bis 46 Gew.-%, bevorzugt von 23 bis 40 Gew.-% der Komponente b), von 2 bis 10 Gew.-%, bevorzugt von 2,5 bis 5 Gew.-% der Komponente c), von 0 bis 9 Gew.-%, bevorzugt von 1 bis 7,5 Gew.-% der Komponente d), von 0,5 bis 7 Gew.-%, bevorzugt von 1 bis 5,5 Gew.-% der Komponente e) und von 0 bis 3 Gew.-%, bevorzugt von 0 bis 1 Gew.-% der Komponente f).

Die erfindungsgemäßen PUR-Alkydharzdispersionen weisen OH-Gehalte von 0 bis 1,5 %, bevorzugt von 0 bis 0,5 % und besonders bevorzugt von 0 % auf. Die OH-Gehalte > 0% werden ausschließlich erhalten durch Verwendung bzw. Mitverwendung von Aminoalkoholen als Kettenverlängerungsmittel Komponente e).

Die in den erfindungsgemäßen wässrigen PUR-Alkydharzdispersionen enthaltene Komponente e) besteht bevorzugt aus einem mindestens linearaliphatischen Diamin e1) und mindestes einem cycloaliphatischen Diamin e2), wobei die gewichtsmäßige Menge des cycloaliphatischen Diamins e2) größer ist, als die gewichtsmäßige Menge des linearaliphtischen Diamins e1).

Das Alkydharz a) enthält bevorzugt die Aufbaukomponenten:
a1) 10 bis 35 Gew.-%, bevorzugt 15 bis 30 Gew.-% mindestens einer Di- und/oder Tricarbonsäure bzw. deren Anhydrid,
a2) 15 bis 40 Gew.-%, bevorzugt 20 bis 33 Gew.-% mindestens eines Di-, Tri- und/oder Tetraols und
a3) 44 bis 75 Gew.-%, bevorzugt 48 bis 68 Gew.-% mindestens einer Monocarbonsäure, bestehend zu mindestens 90 Gew.-%, bevorzugt zu 100 Gew.-% aus Fettsäuren, die zur oxidativen Vernetzung mit Luftsauerstoff befähigte Doppelbindungen enthalten.

Das Alkydharz a) weist bevorzugt eine Hydroxyfunktionalität von 1, 1 bis 2,3, bevorzugt von 2, eine OH-Zahl von 40 bis 130 mg KOH/g, bevorzugt von 50 bis 95 mg KOH/g Substanz und eine Säurezahl von 6 bis 1 mg KOH/g, bevorzugt 4 bis 1,5 mg KOH/g, besonders bevorzugt von 3 bis 2 mg KOH/g auf. Die Alkydharze a) weisen mittlere Molekulargewichte von 750 bis 5000 g/Mol, bevorzugt von 900 g/mol bis 2500 g/Mol auf.

Besonders bevorzugt enthält das Alkydharz a) als Aufbaukomponenten
a11) 7 bis 22 Gew.-% mindestens eine aromatische Dicarbonsäure bzw. deren Anhydrid,
a12) 3 bis 15 Gew.-% mindestens eine lineare, aliphatische Dicarbonsäure sowie
a2) 20 bis 33 Gew.-% mindestens ein Triol und
a3) 48 bis 68 Gew.-% mindestens eine Fettsäure, die zur oxidativen Vernetzung mit Luftsauerstoff befähigte Doppelbindungen enthält,
wobei die Summe a11) und a12) 15 bis 30 Gew.-% beträgt.

Die besonders bevorzugten Alkydharze a) weisen dabei eine OH-Zahl von 50 bis 95 mg KOH/g Substanz mit der berechneten Funktionalität 2 und einem mittleren Molekulargewicht von 1000 bis 2000 g/mol auf.

In einer bevorzugten Ausführungsform enthält das Alkydharz a) mindestens soviel Äquivalente an Monocarbonsäuren a3), wie Äquivalente Triole a2) enthalten sind.

Das Alkydharz a) wird mittels eines Polykondensationsverfahrens unter Abspaltung von Wasser bei Reaktionstemperaturen von 100 bis 260°C hergestellt. Die Reaktion kann unter Zuhilfenahme von Katalysatoren, z.B. auf Zinn-Basis wie Zinnsäure (Fascat^{®} R 4100, Fa. Arcema), Dibutylzinnoxid, Dibutylzinndilaurat oder Zinn-II-Chlorid oder Salzsäure, para-Toluolsulphonsäure und andere literaturbekannte Veresterungskatalysatoren durchgeführt werden. Es wird solange kondensiert, bis eine Säurezahl von 6 bis 1 mg KOH/g, bevorzugt 4 bis 1,5 mg KOH/g, besonders bevorzugt 3 bis 2 mg KOH/g Substanz erreicht ist. Der Einsatz geeigneter Schleppmittel, wie Toluol, Isooktoan, Nonan, Cyclohexan ist möglich, aber nicht bevorzugt. Die Reaktion kann durch Anlegen von Vakuum oder bevorzugt durch Durchleiten des ein- bis dreifachen Reaktorvolumens Stickstoff je Stunde beschleunigt werden. Das Durchleiten von Stickstoff ist bevorzugt.

Geeignete Di- und/oder Tricarbonsäure bzw. deren Anhydride a1) sind z.B. Phthalsäureanhydrid, Isophthalsäure, Terephthalsäure, Tetrahydrophthalsäureanhydrid, Hexahydrophthalsäureanhydrid, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, 2-Methylbernsteinsäure, 3,3-Diethylglutarsäure, 2,2-Dimethylbernsteinsäure, Dimerfettsäuren, Dimerfettsäuregemische, Trimellithsäure und Mischungen der genannten und auch anderer Säuren.

Die anteilige Mitverwendung von Tetracarbonsäuren bzw. deren Anhydriden wie z.B. Pyromellithsäure ist ebenfalls möglich.

Bezogen auf a1) werden bevorzugt Mischungen aus 7 bis 22 Gew.-% mindestens einer aromatischen Dicarbonsäure bzw. deren Anhydrid a11) und 3 bis 15 Gew.-% mindestens einer linearen, aliphatischen Dicarbonsäure a12) eingesetzt.

Bevorzugte Komponenten a11) sind Phthalsäureanhydrid, Isophthalsäure, Terephthalsäure, Tetrahydrophthalsäureanhydrid und/oder deren Mischungen.

Bevorzugte Komponenten a12) sind Adipinsäure, Maleinsäure, und/oder Glutarsäure bzw. deren Mischungen.

Besonders bevorzugt sind die Mischungen aus a11) Phthalsäure und/oder Isophthalsäure mit a12) Adipinsäure.

Geeignete Di-, Tri- und/oder Tetraole a2) sind z.B. Ethylenglykol, Propylenglykol, Butylenglykol, Diethylenglykol, Triethylenglykol, Dipropylenglykol, Tripropylenglykol, Polyalkylenglykole wie Polyethylenglykol, 1,4-Cyclohexandimethanol, 1,4- Cyclohexandiol, Pentandiol, hydriertes Bisphenol A, 1,3-Propandiol, 1,4- Butandiol, 1,6- Hexandiol, Neopentylglykol, Hydroxypivalinsäureneopentylglykolester, Trimethylolpropan, Trimethylolethan, Glycerin, Erythrit, Pentaerythrit, Trimethylolbenzol oder Tris-hydroxyethylisocyanurat und deren Mischungen.

Bevorzugte Komponenten a2) sind Trimethylolpropan und Glycerin, gegebenenfalls in Kombination mit Diethylenglykol oder Neopentylglykol.

Geeignete Monocarbonsäuren a3) sind kurzkettige oder aromatische Monocarbonsäuren wie z.B. Benzoesäure, tert.-Butylbenzoesäure, Hexahydrobenzoesäure oder 2-Ethylhexansäure, Monocarbonsäuren, die zur oxidativen Vernetzung mit Luftsauerstoff befähigte Bestandteile mit Doppelbindungen enthalten, z.B. Sojaölfettsäure, Safflorölfettsäure, Tallölfettsäure, Fischölfettsäure, Holzölfettsäure, Leinölfettsäure oder/und Sonnenblumenölfettsäure sowie halbtrocknende oder nichttrocknende Fettsäuren wie z.B. Rizinusölfettsäure, Kokosnussölfettsäure oder Erdnussölfettsäure. Bevorzugt werden ausschließlich trocknende Fettsäuren, wie z.B. Sojaölfettsäure oder Sonnenblumenölfettsäure eingesetzt.

Die genannten zur oxidativen Trocknung befähigten Fettsäuren, wie z.B. die Sojaölfettsäure enthalten in aller Regel je nach Herkunft und Erntejahr Gemische verschiedener mehr oder weniger ungesättigter und auch gesättigter Fettsäuren in schwankenden Zusammensetzungen. Zur Vereinfachung werden solche Fettsäuren mit höheren Anteilen an zur oxidativen Trocknung befähigten Fettsäuren immer zu 100% als zur oxidativen Trocknung - das heißt zur Vernetzung durch Reaktion mit Luftsauerstoff - befähigt, betrachtet. Diese werden dann als trocknende Öle oder trocknende Fettsäuren bezeichnet.

Geeignete, mindestens difunktionelle Polyisocyanate b) sind z.B. 1,3-Cyclohexandiisocyanat, 1-Methyl-2,4-diisocyanato-cyclohexan, 1-Methyl-2,6-diisocyanato-cyclohexan, Tetramethylendiisocyanat, 4,4'-Diisocyanatodiphenylmethan, 2,4'-Diisocyanatodiphenylmethan, 2,4-Diisocyanatotoluol, 2,6-Diisocyanatotoluol, α,α,α',α,'-Tetra-methyl-*m*- oder *p*-xylylendiisocyanat, 1,6-Hexamethylendiisocyanat, 1-Isocyanato-3,3,5-trimethyl-5-isocyanatomethylcyclohexan (Isophorondiisocyanat) und 4,4'-Diisocyanato-dicyclohexylmethan, sowie deren Mischungen, gegebenenfalls auch mit anderen Isocyanaten oder/und höherfunktionellen Homologen bzw. Oligomeren mit Urethan-, Biuret-, Carbodiimid-, Isocyanurat-, Allophanat-, Iminooxadiazindion- und/oder Uretdiongruppen.

Bevorzugt enthält die Polyisocyanatkomponente b) mindestens 30 bis 95 Gew.-% cycloaliphatische Diisocyanate wie Isophorondiisocyanat, 1-Methyl-2,4(2,6)-diisocyanatocyclohexan, 4,4'- Diisocyanatodicyclohexylmethan und 5 bis 70 Gew.-% aromatische Di- bzw. Polyisocyanate wie 2,4 (2,6)-Diisocyanatotoluol, 4,4'- bzw. 2,4'-Diisocyanatodiphenylmethan und dessen Homologe. Die Mitverwendung von linearaliphatischen Diisocyanaten, wie z.B. Hexamethylendiisocyanat in untergeordneten Mengen, d.h. bis 20% der gesamten Komponente b) ist möglich.

Besonders bevorzugt enthält die Polyisocyanatkomponente b) 55 bis 95 Gew.-% Isophorondiisocyanat und/oder 4,4'- Diisocyanatodicyclohexylmethan und 5 bis 45 Gew.- % 2,4(2,6)-Diisocyanatotoluol oder 4,4' - bzw. 2,4'- Diisocyanatodiphenylmethan.

Geeignete, hydrophilierend wirkende, Komponenten c) sind Dimethylolpropionsäure, Dimethylolbuttersäure, Hydroxypivalinsäure und Caprolactonaddukte an die genannten Hydroxycarbonsäuren, Michaeladditionsprodukte von Diaminen wie z.B. Isophorondiamin oder Ethylendiamin mit 2 Equivalenten Acrylsäure. Bevorzugtes Hydrophilierungsmittel ist die Dimethylolpropionsäure. Es können auch Gemische verschiedener Hydrophilierungsmittel eingesetzt werden.

Die Komponente c) wird vor oder während dem Dispergierschritt durch Reaktion mit einem Neutralisationsmittel in das entsprechende Carboxylat überführt. Dies ist prinzipiell vor oder während der einzelnen Verfahrensschritte bei den unten beschriebenen Herstellprozessen möglich.

Der Neutralisationsgrad liegt zwischen 50 und 140 %, bevorzugt bei 70 bis 110 %.

Geeignete Neutralisationsmittel sind z.B. Triethylamin, Ethyldiisopropylamin, Dimethylisopropylamin, Dimethylcyclohexylamin, N-Methylmorpholin und deren Mischungen.

Die pH-Werte der erfindungsgemäßen Alkydharzdispersionen liegen zwischen 6 bis 10, bevorzugt zwischen 6,5 bis 8,2. Höhere pH-Werte können zu Verfärbungen bei verschiedenen Holzsorten führen.

Die Komponenten d) weisen ein Molekulargewicht von 62 bis 600 g/Mol auf und sind beispielsweise Ethandiol, Di-, Tri-, Tetraethylenglykol, 1,2-Propandiol, Di-, Tri-, Tetrapropylenglykol, 1,3-Propandiol, Butandiol-1,4, Butandiol-1,3, Butandiol-2,3, Pentandiol-1,5, Hexandiol-1,6, 2,2-Dimethyl-1,3-propandiol, Neopentylglykol, hydriertes Bisphenol A, Hydroxypivalinsäureneopentylglykolester 1,4-Dihydroxycyclohexan, 1,4-Dimethylolcyclohexan, Octandiol-1,8, Decandiol-1,10, Dodecandiol-1,12 oder deren Gemische, höherfunktioneller Polyole wie Trimethylolpropan oder Glycerin und/oder Gemische der genannten, gegebenenfalls auch mit anderen Diolen bzw. Triolen. Ebenfalls geeignet sind Diole und/oder Triole, die Umsetzungsprodukte der beispielhaft genannten Diole bzw. Triole mit Ethylenoxid, Propylenoxid und/oder Caprolacton sind. Es können ebenfalls Mischungen verschiedener Diole bzw. Triole d) eingesetzt werden.

Bevorzugt als Komponente d) sind niedermolekulare Diole mit einem Molekulargewicht von 62 bis 142, wie z.B. Butandiol, Hexandiol, Neopentylglykol, Ethylenglykol, 1,4-Cyclohexandiol und/oder 1,4-Cyclohexandimethanol. Besonders bevorzugt ist 1,4-Butandiol.

Als Kettenverlängerungsmittel geeignet Diamine, Triamine bzw. Aminoalkohole e) sind Ethylendiamin, Propylendiamin, 1,2-Diaminopropan, 1,4-Diaminobutan, 2,5-Diamino-2,5-dimethylhexan, 1,5-Diamino-2-methylpentan (Dytek^{®} A, DuPont), 1,6-Diaminohexan, 2,2,4-und/oder 2,4,4-Trimethyl-1,6-diaminohexan, 1,11-Diaminoundecan, 1,12-Diaminododecan, Triaminononan, Hydrazin, Hydrazinhydrat, Adipinsäuredihydrazid, Diethylentriamin, höhermolekulare Polyetherpolyamine mit aliphatisch gebundenen, primären Aminogruppen, wie sie beispielsweise unter der Bezeichnung Jeffamin^{®} von der Firma Huntsman vertrieben werden, 1-Amino-3,3,5-trimethyl-5-aminomethylcyclohexan (IPDA), 2,4- und/oder 2,6-Hexahydrotoluylendiamin (H₆TDA), Isopropyl-2,4-diaminocyclohexan und/oder Isopropyl-2,6-diaminocyclohexan, 1,3-Bis-(aminomethyl)-cyclohexan, 2,4'- und/oder 4,4'-Diamino-dicyclohexylmethan, 3,3'-Dimethyl-4,4'-diamino-dicyclohexyhnethan (Laromin^{®} C 260, BASF AG, DE), die Isomeren, eine Methylgruppe als Kernsubstituenten aufweisenden Diaminodicyclohexylmethane (= C-Monomethyl-diaminodicyclohexylmethane), 3(4)-Aminomethyl-1-methylcyclohexylamin (AMCA) sowie araliphatische Diamine, wie z.B. 1,3-Bis-(aminomethyl)-benzol, Xylylendiamin, Aminoalkohole wie 2-Aminoethanol, Aminopropanole, 3-Amino-1,2-propandiol, Aminobutanole, 1,3-Diamino-2-propanol, Bis-(2-hydroxypropyl)-amin und Propanolamin 1,1'-Dimethyl-1,1'-dipropyl-2,2'iminodiethanol, 2-[(2-Hydroxyethyl-)-amino-2-methylpropan-1-ol, 1-(2-Hydroxyethyl-)-amino-2-propanol und 3,3'-Diallyloxy-2,2'-dihydroxy-dipropylamin, Hydroxyethylethylendiamin, Bishydroxyethylethylendiamin. Ebenfalls geeignet sind Michaeladdukte, die durch Reaktion bifunktioneller, primärer Amine mit Maleinsäurediestern erhalten werden und als Asparaginsäureester bezeichnet werden. Beschrieben sind solche Asparaginsäureester beispielsweise in der EP-A 403 921. Ebenfalls geeignet für die Mitverwendung sind mono-, oder difunktionelle Amine die zusätzlich Alkoxysilangruppen enthalten.

Die Komponente e) enthält bevorzugt mindestens 85 Gew. -%, besonders bevorzugt 100 Gew. -% aliphatische und/oder cycloaliphatische Diamine.

Besonders bevorzugt enthält die Komponente e) eine Mischung aus mindestens einem linearaliphtischen Diamin und/oder Triamin e1) und mindestens einem cycloaliphatischen Diamin e2). Dabei ist die gewichtsmäßige Menge des cycloaliphatischen Diamins e2) größer, als die gewichtsmäßige Menge des linearaliphtischen Diamins und/oder Triamins e1). Bevorzugt besteht die Menge e) zu 55 bis 90 Gew. -% aus e2) und zu 10 bis 45 Gew. -% aus e1).

Bevorzugte linearaliphatische Diamine bzw. Triamine e1) sind Ethylendiamin und Diethylentriamin, bevorzugte cycloaliphatische Diamine e2) sind 1-Amino-3,3,5-trimethyl-5-aminomethylcyclo-hexan (IPDA), 2,4- und/oder 2,6-Hexahydrotoluylendiamin (H₆TDA), 2,4'-und/oder 4,4'-Diamino-dicyclohexylmethan und/oder 3,3'-Dimethyl-4,4'-diamino-dicyclohexylmethan.

Ganz besonders bevorzugt besteht die Komponente e) zu 55 bis 90 Gew.-% aus 1-Amino-3,3,5-trimethyl-5-aminomethylcyclo-hexan (IPDA) e2) und zu 45 bis 10 Gew. -% aus Ethylendiamin e1), gegebenenfalls in Kombination mit Diethylentriamin.

Sonstige Komponenten f) sind z.B. monohydroxyfunktionelle Ethylenoxidpolyether, monohydroxyfunktionelle Propylenoxid/Ethylenoxidcopolyether bzw. monohydroxy-funktionelle Propylenoxid/Ethylenoxidblockpolyether des Molekulargewichtsbereichs 200 bis 3000 g/mol, oder Monoalkohole wie Benzylalkohol bzw. n-Butanol, oder Monoamine wie z.B. N-Butylamin.

Die Herstellung der erfindungsgemäßen Alkydharzdispersionen erfolgt immer über eine isocyanatfunktionelle Alkydharz-Prepolymer-Zwischenstufe, welche durch Umsetzung des Alkydharzes a) und des Hydrophilierungsmittels c) und gegebenenfalls der Komponenten d) und f) mit der Isocyanatkomponente b) erhalten wird. Diese Umsetzung kann einstufig, d.h. durch Umsetzung aller Reaktionskomponenten in einem Schritt, aber auch mehrstufig, wie z.B. durch Umsetzung von a), b), c) und gegebenenfalls f) im ersten Reaktionsschritt und Umsetzung dieses Zwischenproduktes in einem 2. Reaktionschritt mit Komponente d) zur isocyanatfunktionellen Alkydharz-Prepolymer-Zwischenstufe erfolgen. Es sind auch andere Reaktionsfolgen in der Umsetzung der Komponenten a), b), c), d) und gegebenenfalls f) möglich.

Gegenstand der vorliegenden Erfindung ist somit ebenfalls ein Verfahren zur Herstellung der erfindungsgemäßen PUR-Alkydharzdispersionen, dadurch gekennzeichnet, dass die Komponenten a) bis d) und gegebenenfalls f) in einem oder mehreren Reaktionsschritten zu einem isocyanatfunktionellen Alkydharz umgesetzt werden, wobei Lösemittel und Neutralisationsmittel vor, während und/oder nach der Reaktion zugesetzt werden, dann eine Kettenverlängerung mit Komponente e) in organischer Lösung durchgeführt und anschließend in oder mit Wasser dispergiert wird. Das Lösemittel wird bevorzugt während oder nach dem Dispergierschritt destillativ abgetrennt.

In einer weiteren Verfahrensvariante des erfindungsgemäßen Verfahrens wird nach der Neutralisation dann in oder mit Wasser dispergiert und anschließend eine Kettenverlängerung mit Komponente e) in wässriger Dispersion durchgeführt.

Bei mehrstufiger Verfahrensweise ist es auch möglich, die erste Stufe, in der das Alkydharz a) das Polyisocyanate c) und gegebenenfalls die Hydrophilierungskomponente b) umgesetzt werden ohne Lösemittel durchzuführen, dann Lösemittel zuzusetzen und die zweite Stufe, die Umsetzung mit Komponente d) und, falls b) nicht bereits in der ersten Stufe enthalten war, mit b) durchzuführen.

In einer bevorzugten Verfahrensvariante des erfindungsgemäßen Verfahrens werden die Komponenten a) bis d) und gegebenenfalls f) in einem oder mehreren Reaktionsschritten zu einem isocyanatfunktionellen Alkydharz umgesetzt, wobei Lösemittel vor, während oder nach der Reaktion zugesetzt und das Neutralisationsmittel während oder nach der Reaktion, bevorzugt nach der Reaktion zugegeben wird, anschließend eine erste Kettenverlängerung mit einem Teil der Komponente e) in organischer Lösung durchgeführt und dann eine zweite Kettenverlängerung mit dem Rest der Komponente e) während oder nach dem Dispergierschritt durchgeführt wird, wobei das Mengenverhältnis der eingesetzten Komponenten e) des ersten zum zweiten Kettenverlängerungsschritt 0,3 zu 1 bis 6 zu 1 beträgt.

Das Lösemittel wird bevorzugt während oder nach dem Dispergierschritt destillativ abgetrennt.

Die Kettenverlängerungskomponente e) wird in Mengen von 35 bis maximal 90 Gew.-%, bevorzugt von 45 bis 75 Gew.-%, bezogen auf den NCO-Gehalt des isocyanatfunktionellen Alkydharzes, eingesetzt.

Die Herstellung der isocyanatfunktionellen Alkydharz-Prepolymer-Zwischenstufe erfolgt in organischer Lösung mit Festkörpergehalten von 30 bis 95 Gew.-%, bevorzugt von 55 bis 80 Gew.-%.

Grundsätzlich sind alle Lösemittel geeignet, die nicht mit Isocyanatgruppen reagieren und zumindest in Mischung mit anderen Lösemitteln ein ausreichendes Lösevermögen für die Rohstoffe bzw. Endprodukte aufweisen, wie z.B. Aceton, Methylethylketon, Methylisobutylketon, Solvent Naphta, Toluol, Xylol, Cyclohexan, Methoxypropylacetat, N-Methylpyrrolidon, N-Ethylpyrrolidon, Diethylenglykoldimethylether, Dipropylenglykoldimethylether, Ethylenglykoldimethylether oder Tetramethoxymethan. Bevorzugtes Lösemittel ist Aceton.

Die Umsetzung der Komponenten a), b), c) und gegebenenfalls d) kann mit oder ohne Zusatz von katalytisch wirkenden Substanzen durchgeführt werden. Geeignete Katalysatoren sind die in der Polyurethanchemie gebräuchlichen Metallkatalysatoren wie z.B. Zinnverbindungen wie Dibutylzinndilaurat, Formrez^{®} UL 29 (Zinnkatalysator; Witco, USA), Butylzinnoxid, Dibutylzinnoxid, Fascat^{®} 4100 (Zinnkatalysator, Arkema, France), Zinnchlorid, Zinn-II-oktoat oder Wismutoktoat, Phenylquecksilberacetat, ebenfalls geeignet sind Aminkatalysatoren wie z.B. Triethylamin, Diazabicyclononen, Diazabicyclooctan, Diazabicycloundecen und/oder Dimethylaminopyridin. Bevorzugt erfolgt die Umsetzung in Gegenwart von Katalysatoren. Besonders bevorzugt ist der Einsatz von 25 bis 250 ppm Metallkatalysatoren bezogen auf die Mengen a), b), c) und gegebenenfalls d), bevorzugt Dibutylzinndilaurat, Dibutylzinnoxid, Zinn-II-Oktoat und Wismutoktoat.

Das erfindungsgemäße Verfahren wird bevorzugt unter Anwesenheit von Trocknungsbeschleuniger auf Basis von Kobalt, Vanadin, Mangan, Kupfer, Zirkonium, Calcium und/oder Zinkverbindungen durchgeführt. Diese Trocknungsbeschleuniger werden bevorzugt vor dem Dispergierschritt zugesetzt. Es ist auch möglich Trocknungsbeschleuniger nach dem Dispergierschritt oder auch erst später bei der Formulierung des Lackes zuzusetzen. In diesen Fällen werden die Trocknungsbeschleuniger zwecks leichteren Einarbeitbarkeit in der Regel in Kombination mit dispergierend bzw. emulgierend wirkenden Substanzen eingesetzt bzw. entsprechend chemisch modifiziert.

In einer bevorzugten Ausführungsform der erfindungsgemäßen Verfahrens werden Trocknungsbeschleuniger bereits während der Umsetzung der Komponenten a), b), c) und gegebenenfalls d) zu einem isocyanatfunktionellen Alkydharz zugesetzt. Besonders bevorzugt ist die Zugabe von Trocknungsbeschleuniger bei der zweistufigen Herstellung des isocyanatfunktionellen Alkydharzes nach der Herstellung des isocyanatfunktionellen Umsetzungsproduktes der ersten Reaktionsstufe aus a), b) und c), vor, zusammen mit, oder nach, bevorzugt nach Zugabe der Komponente d), mit anschließender Umsetzung zu dem isocyanatfunktionellen Alkydharz, welches dann kettenverlängert und dispergiert wird.

Die erfindungsgemäßen Alkydharzdispersionen weisen Festkörpergehalte von 25 bis 50 Gew. -% und mittlere Teilchengrößen von 20 bis 300, bevorzugt von 30 bis 200 nm auf.

Die erfindungsgemäßen Alkydharzdispersionen können in Kombination mit weiteren Dispersionen, wie z.B. Polyacrylat-Dispersionen, Polyacrylat-Emulsionen, anderen Alkyd-Dispersionen, Polyurethan-Polyacrylat-Dispersionen, Polyurethan-Dispersionen, Polyester-Dispersionen, wässrigen Epoxidharzen, Polymerisat-Dispersionen und/oder in Kombination mit Vernetzerharzen wie z.B. gegebenenfalls hydrophile Gruppen enthaltende Polyisocyanate mit freien oder mit blockierten Polyisocyanatgruppen, mit Polyaziridinen, mit Aminovernetzerharzen, z.B. auf Melamin- oder Harnstoffbasis eingesetzt werden.

Die Kombination mit gegebenenfalls hydrophilierten, freie Isocyanatgruppen enthaltenden Polyisocyanaten, z.B. auf Basis von Trimeren, Urethanen, Allophanaten, Uertdionen, Iminooxadiazindionen und/oder Biurten des Hexamethylendiisocyanats und/oder des Isophorondiisocyanats führt zu reaktiven Zweikomponenten(2K)-Polyurethansystemen mit einem potlife von einigen Stunden.

Gegenstand der vorliegenden Erfindung sind auch Bindemittelkombinationen, enthaltend die erfindungsgemäßen Alkydharzdispersionen und Vernetzerharze auf Basis von Polyisocyanaten und oder Aminovernetzerharzen.

Zur Hydrophilierung der Polyisocyanate geeignete Gruppen sind z.B. Polyethylenoxidketten und/oder Carboxylat- bzw. Sulphonatgruppen, die über entsprechende Hydroxyl- und/oder Aminogruppen enthaltende Verbindungen mit dem Polyisocyanat umgesetzt werden können.

Bevorzugt sind Bindemittelkombinationen der erfindungsgemäßen Alkydharzdispersionen und Polyisocyanatvernetzern mit freien Isocyanatgruppen.

Besonders bevorzugt sind Bindemittelkombinationen der erfindungsgemäßen Alkydharzdispersionen und hydrophilierten Polyisocyanatvernetzern mit freien Polyisocyanatgruppen.

Gegenstand der vorliegenden Erfindung ist auch die Verwendung der erfindungsgemäßen Alkydharzdispersionen zur Herstellung von Klarlacken, pigmentierten oder nicht pigmentierten Beschichtungen auf mineralischen bzw. keramisch Untergründen und Materialien, Beton, Hartfaserwerkstoffe, metallische Untergründe, Kunststoffe, Papier, Pappe, Verbundwerkstoffe, Glas, Porzellan, Textil und/oder Leder. Bevorzugte Substrate sind hölzerne und holzartige Substrate wie z.B. Möbel, Holzfaserplatten, Parkett, Fensterrahmen, Türen, Zäune, Panellen, Bretter, Balken oder Dächer.

### Beispiele

### I) Alkydharz 1)

In einem 5 1 Reaktor mit Rührer, Kühler und Wasserabscheider werden 466 g Phthalsäureanhydrid, 460 g Adipinsäure, 2651 Sojaölfettsäure, 1266 g Trimethylolpropan und 2 g Fascat® 4100 [Butylzinnoxid, Arkema, Frankreich] eingewogen, aufgeschmolzen bzw. homogenisiert und unter Durchleiten von 5 1 Stickstoff/Stunde auf 190°C aufgeheizt. Es wird solange bei dieser Temperatur unter Wasserabspaltung verestert bis eine Säurezahl von < 2,5 mg KOH/g erreicht ist. Anschließend wird auf 120 °C abgekühlt und in Weißblechdosen abgefüllt.

Es wird das 100%ige Alkydharz 1) mit einer berechneten Funktionalität von 2,0, einer OH-Zahl von 78 mg KOH/g, einer Säurezahl von 2,3 mg KOH/g und einem berechneten mittleren Molekulargewicht von 1428 g/Mol erhalten.

### II) Alkydharz 2)

In einem 5l Reaktor mit Rührer, Kühler und Wasserabscheider werden 777 g Phthalsäureanhydrid, 153 g Adipinsäure, 2651 Sojaölfettsäure, 1266 g Trimethylolpropan und 2 g Fascat® 4100 eingewogen, aufgeschmolzen bzw. homogenisiert und unter Durchleiten von 5 1 Stickstoff/Stunde auf 190°C aufgeheizt. Es wird solange bei dieser Temperatur unter Wasserabspaltung verestert bis eine Säurezahl von < 2,5 mg KOH/g erreicht ist. Anschließend wird auf 120 °C abgekühlt und in Weißblechdosen abgefüllt.

Es wird das 100%ige Alkydharz 2) mit einer berechneten Funktionalität von 2,0, einer OH-Zahl von 77 mg KOH/g, einer Säurezahl von 2,2 mg KOH/g und einem berechneten mittleren Molekulargewicht von 1452 g/Mol erhalten.

### III) Alkydharz 3)

In einem 5 1 Reaktor mit Rührer, Kühler und Wasserabscheider werden 470 g Phthalsäureanhydrid, 292 g Adipinsäure, 170 g Isophthalsäure, 2151 g Sojaölfettsäure, 500 g Erdnußölfettsäure, 1266 g Trimethylolpropan und 1,5 g Fascat^{®} 4100 eingewogen, aufgeschmolzen bzw. homogenisiert und unter Durchleiten von 5 1 Stickstoff/Stunde auf 190°C aufgeheizt. Es wird solange bei dieser Temperatur unter Wasserabspaltung verestert bis eine Säurezahl von < 2,5 mg KOH/g erreicht ist. Anschließend wird auf 120 °C abgekühlt und in Weißblechdosen abgefüllt.

Es wird das 100%ige Alkydharz 3) mit einer berechneten Funktionalität von 2,0, einer OH-Zahl von 78 mg KOH/g, einer Säurezahl von 2,2 mg KOH/g und einem berechneten mittleren Molekulargewicht von 1436 g/Mol erhalten.

### IV) Alkydharz 4)

In einem 15 1 Reaktor mit Rührer, Kühler und Wasserabscheider werden 3718 g Isophthalsäure, 511 g Adipinsäure, 7461g Sojaölfettsäure, 3564 g Trimethylolpropan, 1019 g Neopentylgkykol und 2 g Fascat® 4100 eingewogen, aufgeschmolzen bzw. homogenisiert und unter Durchleiten von 15 1 Stickstoff/Stunde auf 190°C aufgeheizt. Es wird solange bei dieser Temperatur unter Wasserabspaltung verestert bis eine Säurezahl von < 2,5 mg KOH/g erreicht ist. Anschließend wird auf 120 °C abgekühlt und in Weißblechdosen abgefüllt.

Es wird das 100%ige Alkydharz 3) mit einer berechneten Funktionalität von 2,0, einer OH-Zahl von 80 mg KOH/g, einer Säurezahl von 2,1 mg KOH/g und einem berechneten mittleren Molekulargewicht von 1418 g/Mol erhalten.

### PUR-Alkydharzdispersion 1): Prepolymer zweistufig, Neutralisation und KV in org. Lösung, Sikkativ, Dispergierung in Wasser

In ein 4 1 Reaktionsgefäß mit Rührer und Rückflusskühler werden 306,2 g Alkydharz 1), 19,1 g Dimethylolpropionsäure und 300 g Aceton eingewogen und homogenisiert. Anschließend wird unter Rühren ein Tropfen Desmorapid^{®} Z [Dibutylzinndilaurat, Bayer MaterialScience AG, Leverkusen, DE], 40,8 g 2,4(2,6)-Diisocyanatotoluol und 138,5 g Isophorondiisocyanat zugegeben. Diese Reaktionsmischung wird bei 60 °C solange gerührt, bis der NCO-Wert < 5,3 % ist. Dann werden 18,6 g Butandiol, zugegeben und gerührt bis der NCO-Wert < 3,0 % ist. Anschließend wird mit 637 g Aceton verdünnt und 14,4 g Triethylamin zur Neutralisation der Carboxylgruppen zugegeben. Anschließend wird eine Mischung aus 15,3 g Isophorondiamin, 5,4 g Ethylendiamin und 36,5 g Wasser in 5 Minuten zudosiert, dann werden 0,6 g Octa-Soligen® Cobalt 7 aqua [Kobalt Sikkativ, Borchers GmbH, Deutschland. Die angegebene Menge an Octa-Soligen^{®} Cobalt 7 aqua ist immer auf den Wirkstoffgehalt des Sikkativs bezogen] zugegeben und homogenisiert. Anschließend werden 920 g destilliertes Wasser zugegeben und das Aceton abdestilliert. Es wird die erfindungsgemäße, praktisch lösemittelfreie Alkydharzdispersion 1), mit einem Festkörpergehalt von 36%, einem pH-Wert von 7,8, und einer mittleren Teilchengröße von 149 nm erhalten.

### PUR-Alkydharzdispersion 2): Prepolymer einstufig, Neutralisation und KV in org. Lösung, Sikkativ, Dispergierung in Wasser

In ein 4 1 Reaktionsgefäß mit Rührer und Rückflusskühler werden 306,2 g Alkydharz 1), 26,3 g Dimethylolpropionsäure, 14 g Butandiol und 300 g Aceton eingewogen und homogenisiert. Anschließend wird unter Rühren ein Tropfen Desmorapid^{®} Z und 204,2 g Isophorondiisocyanat zugegeben. Diese Reaktionsmischung wird bei 60 °C solange gerührt, bis der NCO-Wert < 4,1 % ist. Dann wird mit 862 g Aceton verdünnt und 19,8 g Triethylamin zur Neutralisation der Carboxylgruppen zugegeben. Anschließend wird eine Mischung aus 22,2 g Isophorondiamin, 5,9 g Ethylendiamin und 25,6 g Wasser in 5 Minuten zudosiert, dann werden 2,2 g Octa-Soligen® Cobalt 7 aqua zugegeben und homogenisiert. Anschließend werden 1250 g destilliertes Wasser zugegeben und das Aceton abdestilliert. Es wird die erfindungsgemäße, praktisch Lösemittelfreie Alkydharzdispersion 2), mit einem Festkörpergehalt von 30%, einem pH-Wert von 8,3, und einer mittleren Teilchengröße von 95 nm erhalten.

### PUR-Alkydharzdispersion 3): Prepolymer einstufig, Neutralisation und KV in org. Lösung, Sikkativ, Dispergierung in Wasser

In ein 4 1 Reaktionsgefäß mit Rührer und Rückflusskühler werden 306,2 g Alkydharz 1), 19,2 g Dimethylolpropionsäure, 18,5 g Butandiol und 300 g Aceton eingewogen und homogenisiert. Anschließend wird unter Rühren ein Tropfen Desmorapid^{®} Z und 191,8 g Isophorondiisocyanat zugegeben. Diese Reaktionsmischung wird bei 60 °C solange gerührt, bis der NCO-Wert < 3,6 % ist. Dann wird mit 839 g Aceton verdünnt und 14,5 g Triethylamin zur Neutralisation der Carboxylgruppen zugegeben. Anschließend wird eine Mischung aus 27,2 g Isophorondiamin, 2,4 g Ethylendiamin und 154,6 g Wasser in 5 Minuten zudosiert, dann werden 0,6 g Octa-Soligen^{®} Cobalt 7 aqua zugegeben und homogenisiert. Anschließend werden 840 g destilliertes Wasser zugegeben und das Aceton abdestilliert. Es wird die erfindungsgemäße, praktisch lösemittelfreie Alkydharzdispersion 3), mit einem Festkörpergehalt von 36%, einem pH-Wert von 7,5, und einer mittleren Teilchengröße von 182 nm erhalten.

### PUR-Alkydharzdispersion 4): Prepolymer zweistufig, Neutralisation und KV in org. Lösung, Sikkativ, Dispergierung in Wasser

In ein 4 1 Reaktionsgefäß mit Rührer und Rückflusskühler werden 344,5 g Alkydharz 1), 21,9 g Dimethylolpropionsäure und 440 g Aceton eingewogen und homogenisiert. Anschließend wird unter Rühren ein Tropfen Desmorapid^{®} Z 45 g 4,4'-Diisocyanatodiphenylmethan und 175,8 g Isophorondiisocyanat zugegeben. Diese Reaktionsmischung wird bei 60 °C solange gerührt, bis der NCO-Wert < 4,6 % ist. Dann werden 18,5 g Butandiol, zugegeben und gerührt bis der NCO-Wert < 2,9 % ist. Anschließend wird mit 640 g Aceton verdünnt und 16,5 g Triethylamin zur Neutralisation der Carboxylgruppen zugegeben. Anschließend wird eine Mischung aus 12,2 g Isophorondiamin, 4,3 g Ethylendiamin und 93,8 g Wasser in 5 Minuten zudosiert, dann werden 0,6 g Octa-Soligen^{®} Cobalt 7 aqua zugegeben und homogenisiert. Anschließend werden 860 g destilliertes Wasser zugegeben und das Aceton abdestilliert. Es wird die erfindungsgemäße, praktisch lösemittelfreie Alkydharzdispersion 4), mit einem Festkörpergehalt von 38%, einem pH-Wert von 8,2, und einer mittleren Teilchengröße von 211 nm erhalten.

### Prüfergebnisse:

Die PUR-Alkydharzdispersionen 1), 2), 3) und 4) werden mit 8% Butyldiglykol/Wasser = 1:1 - Gemisch als Koaleszenzmittel versetzt und dann Klarlacke mit 200 µm Nassfilmstärke auf Glasplatten, bzw. 3 Schichten von 120g/m² auf Holz aufgezogen, anschließend erfolgt die Filmtrocknung bei Raumtemperatur bzw. bei 50°C. Folgende Prüfergebnisse der Klarlacke wurden erhalten:

**Tabelle 1:**

| Alkydharzdispersion | 1) | 2) | 3) | 4) |
|---|---|---|---|---|
| Holzverfärbung | keine | keine | keine | keine |
| Filmoptik | klare, homogene Filme mit sehr gutem Verlauf | | | |
| Farbverstärkung nach Aushärtung | sehr gering | mittel | gering | gering |
| Sandtrocknung bei RT [Min.] | 38' | 40' | 40' | 35' |
| Vollständige Trocknung bei RT [Stunden] | 1 h 55' | 1 h 32' | 1 h 30' | 1 h40' |
| Filmhärte nach 1Tag/4 T./7 T. Trocknung bei RT [Pendelsek.] | 38"/88"/104" | 49"/109"/112" | 31"/95"/109" | 31"/94"/101" |
| Filmendhärte [Pendelsekunden; nach 16 h Trocknung bei 50°C] | 104" | 126" | 116" | 118" |
| Wasserfestigkeit [24 h]; Note 5 = ohne Befund.; Note 0 = gelöst] | 5 | 5 | 5 | 5 |
| Ethanolfestigkeit * [30 Min. ]; Note 5 = ohne Befund, Note 0 = Oberfläche zerstört | 3 4 3 | | | 3 |
| BHMR **[Note 5 keine Beschädigung, 4 leichter Glanzverlust, 3 leichter Abrieb, 2 starker Abrieb, 1 = Oberfläche zerstört] | 4-5 | 4 | 4 | 4-5 |
| Haftung [ Note 5 = ausgezeichnete Haftung, Note 1 = keine Haftung | 5 | 5 | 5 | 5 |

| | | | | |
|---|---|---|---|---|
| * Ethanolfestigkeit: Auf die Prüffläche wird das mit dem Prüfmittel getränkte Filzstück gelegt und mit dem Schraubdeckel zugedeckt. Nach der im Prüfplan angegebenen Belastungszeit (5 und 30 Minuten) wird das Filzstück entfernt und die Prüffläche mit dem Papiertuch gereinigt und mit dem Fingernagel gekratzt. Die Prüffläche wird sofort nach folgender Notenskala beurteilt: Note 5: Keine sichtbaren Veränderungen (keine Beschädigung). Note 4: Leichte Kratzmarkierung oder Glanz- oder Farbtonveränderung, nur sichtbar, wenn sich die Lichtquelle in der Prüfoberfläche auf oder dicht neben der Markierung spiegelt und direkt zum Auge des Betrachters reflektiert wird, oder einige eben erkennbare, abgegrenzte Markierungen. Note 3: Kratzmarkierung an der Oberfläche oder Leichte Markierung aus mehreren Blickwinkeln zu sehen, zum Beispiel ein eben erkennbarer fast völliger Kreis oder Kreisfläche. Note 2: Starke Markierung, die Oberflächenstruktur ist beschädigt, aber der Film ist nicht ganz weg. Note 1: Starke Markierung, die Oberflächenstruktur ist verändert oder das Oberflächenmaterial ist teilweise zerstört oder das Filterpapier haftet an der Oberfläche. Beim Kratzen wird der film entfernt (bis auf Holz) Note 0: Sehr starke Markierung, die Oberflächenstruktur ist verändert oder das Oberflächenmaterial ist ganz oder teilweise zerstört oder das Filterpapier haftet an der Oberfläche. ** Black heel mark resistance/Schuhsohlenabriebbeständigkeit: Die Oberfläche wird reproduzierbar durch ein fallendes Pendel beansprucht bzw. geschädigt. | | | | |

Die erfindungsgemäßen Alkydharzdispersionen sind in der Lage alle gestellten Anforderungen zu erfüllen. Sie sind kostengünstig und unkompliziert herstellbar und enthalten in der Lieferform kein organisches Lösemittel. Damit hergestellte Klarlacke zeigen eine sehr gute Filmbildung, eine sehr gute Anfeuerung des Holzes, sie trocknen in weniger als 2 Stunden und die erzeugten Filme weisen eine sehr gute Wasser- und Ethanolbeständigkeit auf. Die Schuhsohlenabriebbeständigkeit ist ebenfalls ausgezeichnet. Der Lösemittelbedarf zur Filmbildung ist ausgesprochen gering und die Art des Lösemittels ist frei wählbar, je nach Anforderung.

### PUR-Alkydharzdispersion 5): Prepolymer zweistufig + Sikkativ, Neutralisation und KV in org. Lösung, Dispergierung in Wasser, Zugabe von KV

In ein 15 1 Reaktionsgefäß mit Rührer und Rückflusskühler werden 2160 g Alkydharz 1), 139 g Dimethylolpropionsäure und 2100 g Aceton eingewogen und homogenisiert. Anschließend wird unter Rühren 100 ppm Desmorapid^{®} Z, 283 g 2,4(2,6)-Diisocyanatotoluol und 982 g Isophorondiisocyanat zugegeben. Diese Reaktionsmischung wird bei 55 °C solange gerührt, bis der NCO-Wert < 5,2 % ist. Dann werden 139 g Butandiol und 5 g Sikkativ Octa-Soligen^{®} Cobalt 7 aqua zugegeben und gerührt bis der NCO-Wert < 2,8 % ist. Anschließend wird mit 280 g Aceton verdünnt und 104 g Triethylamin zur Neutralisation der Carboxylgruppen zugegeben. Anschließend wird eine Mischung aus 24,6 g Ethylendiamin, 69,7 g Isophorondiamin und 395 g Wasser in 5 Minuten zudosiert und dann durch Zugabe 5600 g Wasser dispergiert. Nach dem Dispergieren wird ein Mischung von 34,9 g Isophorondiamin, 12,3 g Ethylendiamin und 198 g Wasser zudosiert, 15 Minuten gerührt, und dann das Aceton im leichten Vakuum abdestilliert. Es wird die erfindungsgemäße, praktisch lösemittelfreie Alkydharzdispersion 5), mit einem Festkörpergehalt von 38 %, einem pH-Wert von 7,9, und einer mittleren Teilchengröße von 110 nm erhalten.

### PUR-Alkydharzdispersion 6): Prepolymer zweistufig + Sikkativ, Neutralisation und KV in org. Lösung, Dispergierung in Wasser + KV

In ein 4 1 Reaktionsgefäß mit Rührer und Rückflusskühler werden 208 g Alkydharz 1), 206 g Alkydharz 4), 26,5 g Dimethylolpropionsäure und 400 g Aceton eingewogen und homogenisiert. Anschließend werden unter Rühren 100 ppm Desmorapid^{®} Z, 54,2 g 2,4(2,6)-Diisocyanatotoluol und 188 g Isophorondiisocyanat zugegeben. Diese Reaktionsmischung wird bei 55 °C solange gerührt, bis der NCO-Wert < 5,2 % ist. Dann werden 26,7 g Butandiol und 2,9 g Octa-Soligen^{®} 144 aqua (Kobalt enthaltendes Sikkativ; Borchers GmbH, Deutschland) zugegeben und gerührt bis der NCO-Wert < 2,86 % ist. Anschließend wird mit 430 g Aceton verdünnt und 20 g Triethylamin zur Neutralisation der Carboxylgruppen zugegeben. Anschließend wird eine Mischung aus 4,7 g Ethylendiamin, 13,3 g Isophorondiamin und 75,6 g Wasser in 5 Minuten zudosiert und anschließend die acetonische Polymerlösung in eine Mischung aus 1098 g Wasser, 6,7 g Isophorondiamin und 2,4 g Ethylendiamin dispergiert, 15 Minuten gerührt, und dann das Aceton im leichten Vakuum abdestilliert. Es wird die erfindungsgemäße, praktisch lösemittelfreie Alkydharzdispersion 6), mit einem Festkörpergehalt von 37 %, einem pH-Wert von 7,8 und einer mittleren Teilchengröße von 135 nm erhalten.

Die Dispersionen 5) und 6) werden mit Wasser auf einen Festkörpergehalt von 35% verdünnt und mit 200 µm Nassfilmstärke auf Glas, schwarz gefärbtes Plexiglas und in einer Menge von 3 x 120 g/m² auf Eichebretter aufgetragen. Die Filme werden 16 h bei 50°C forciert getrocknet. Folgende Prüfergebnisse werden erhalten:

**Tabelle 2:**

| **PUR-Alkydharzdispersion** | **5)** | **6)** |
|---|---|---|
| Verfärbung des Holzes durch den Lack | keine | keine |
| Filmoptik (Glas) | glatt, sehr guter Verlauf | |
| Filmoptik (plexiglas) | klar, keine Trübung | |
| Glanz n. Gardner (Plexiglas) 20°/60° | 84/90 | 83/91 |
| Haze (Trübungsfaktor) nach Gardner | 30 | 33 |
| Pendelhärte | 92 " | 124" |
| Wasserfestigkeit [24 h Belastung; Note 5 = ohne Befund.; Note 1 = aufgelöst] | 5 | 5 |
| Ethanolfestigkeit [30 Minuten Belastung, anschließende Erholung des Filmes; Note 5 = ohne Befund, Note 3 = reversible Erweichung; Note 1 = aufgelöst] | 5 | 5 |
| Haftung [Note 5 = ausgezeichnete Haftung, Note 1 = keine Haftung] | 5 | 5 |

Die Filme weisen sehr gute mechanische und Beständigkeitseigenschaften auf, die filmoptischen Werte sind ebenfalls sehr gut.

### PUR-Alkydharzdispersion 7): Prepolymer zweistufig + Sikkativ, Neutralisation und KV in org. Lösung, Dispergierung in Wasser, Zugabe von KV

In ein 4 l Reaktionsgefäß mit Rührer und Rückflusskühler werden 429,6 g Alkydharz 2), 26,5 g Dimethylolpropionsäure und 415 g Aceton eingewogen und homogenisiert. Anschließend werden unter Rühren 75 ppm Desmorapid^{®} Z, 54,2 g 2,4(2,6)-Diisocyanatotoluol und 188 g Isophorondiisocyanat zugegeben.

Diese Reaktionsmischung wird bei 55 °C solange gerührt, bis der NCO-Wert < 5,1 % ist. Dann werden 26,7 g Butandiol und 0,75 g Octa-Soligen^{®} Cobalt 7 aqua zugegeben und gerührt bis der NCO-Wert < 2,8 % ist. Anschließend wird mit 447 g Aceton verdünnt und 20 g Triethylamin zur Neutralisation der Carboxylgruppen zugegeben. Anschließend wird eine Mischung aus 4,8 g Ethylendiamin, 13,5 g Isophorondiamin und 76 g Wasser in 5 Minuten zudosiert, anschließend die acetonische Polymerlösung in 1080 g Wasser dispergiert und anschließend eine Mischung aus 6,7 g Isophorondiamin, 2,4 g Ethylendiamin und 51 g Wasser zudosiert und dann das Aceton im leichten Vakuum abdestilliert. Es wird die erfindungsgemäße, praktisch lösemittelfreie Alkydharzdispersion 7), mit einem Festkörpergehalt von 38 %, einem pH-Wert von 8,4 und einer mittleren Teilchengröße von 150 nm erhalten.

### PUR-Alkydharzdispersion 8): Prepolymer zweistufig + Sikkativ, Neutralisation und KV in org. Lösung, Dispergierung in Wasser, Zugabe von KV

In ein 4 l Reaktionsgefäß mit Rührer und Rückflusskühler werden 435 g Alkydharz 3), 26,5 g Dimethylolpropionsäure und 415 g Aceton eingewogen und homogenisiert. Anschließend werden unter Rühren 75 ppm Desmorapid^{®} Z, 54,2 g 2,4(2,6)-Diisocyanatotoluol und 188 g Isophorondiisocyanat zugegeben. Diese Reaktionsmischung wird bei 65 °C solange gerührt, bis der NCO-Wert < 5,0 % ist. Dann werden 26,7 g Butandiol und 0,75 g Octa-Soligen^{®} Cobalt 7 aqua zugegeben und gerührt bis der NCO-Wert < 2,7 % ist. Anschließend wird mit 451 g Aceton verdünnt und 20 g Triethylamin zur Neutralisation der Carboxylgruppen zugegeben. Anschließend wird eine Mischung aus 4,8 g Ethylendiamin, 13,5 g Isophorondiamin und 76 g Wasser in 5 Minuten zudosiert, anschließend die acetonische Polymerlösung in 1080 g Wasser dispergiert und anschließend eine Mischung aus 6,7 g Isophorondiamin, 2,4 g Ethylendiamin und 51 g Wasser zudosiert und dann das Aceton im leichten Vakuum abdestilliert. Es wird die erfindungsgemäße, praktisch lösemittelfreie Alkydharzdispersion 8), mit einem Festkörpergehalt von 38 %, einem pH-Wert von 8,2 und einer mittleren Teilchengröße von 103 nm erhalten.

### PUR-Alkydharzdispersion 9): Prepolymer zweistufig + Sikkativ, Neutralisation und KV in org. Lösung, Dispergierung in Wasser, Zugabe von KV

In ein 4 l Reaktionsgefäß mit Rührer und Rückflusskühler werden 435 g Alkydharz 1), 26,5 g Dimethylolpropionsäure und 406 g Aceton eingewogen und homogenisiert. Anschließend werden unter Rühren 75 ppm Desmorapid^{®} Z, 119,7 g 2,4(2,6)-Diisocyanatotoluol, 52,6 g Isophorondiisocyanat und 59,0 g 4,4'-Diisocyanatodicylohexylmethan zugegeben. Diese Reaktionsmischung wird bei 65 °C solange gerührt, bis der NCO-Wert < 5,2 % ist. Dann werden 26,7 g Butandiol und 0,75 g Octa-Soligen^{®} Cobalt 7 aqua zugegeben und gerührt bis der NCO-Wert < 2,8 % ist. Anschließend wird mit 438 g Aceton verdünnt und 20 g Triethylamin zur Neutralisation der Carboxylgruppen zugegeben. Anschließend wird eine Mischung aus 4,8 g Ethylendiamin, 13,5 g Isophorondiamin und 76 g Wasser in 5 Minuten zudosiert, anschließend die acetonische Polymerlösung in 1056 g Wasser dispergiert und anschließend eine Mischung aus 6,7 g Isophorondiamin, 2,4 g Ethylendiamin und 51 g Wasser zudosiert und dann das Aceton im leichten Vakuum abdestilliert. Es wird die erfindungsgemäße, praktisch lösemittelfreie Alkydharzdispersion 9), mit einem Festkörpergehalt von 38 %, einem pH-Wert von 8,3 und einer mittleren Teilchengröße von 200 nm erhalten.

### PUR-Alkydharzdispersion 10): Prepolymer zweistufig + Sikkativ, Neutralisation und KV in org. Lösung, Dispergierung in Wasser, Zugabe von KV

In ein 4 l Reaktionsgefäß mit Rührer und Rückflusskühler werden 334 g Alkydharz 1), 24,9 g Dimethylolpropionsäure und 362 g Aceton eingewogen und homogenisiert. Anschließend werden unter Rühren 75 ppm Desmorapid^{®} Z, 56,1 g 2,4(2,6)-Diisocyanatotoluol und 195,4 g Isophorondiisocyanat zugegeben. Diese Reaktionsmischung wird bei 65 °C solange gerührt, bis der NCO-Wert < 6,8 % ist. Dann werden 35,6 g Butandiol und 0,72 g Octa-Soligen^{®} Cobalt 7 aqua zugegeben und gerührt bis der NCO-Wert < 3,2 % ist. Anschließend wird mit 391 g Aceton verdünnt und 18,8 g Triethylamin zur Neutralisation der Carboxylgruppen zugegeben. Anschließend wird eine Mischung aus 4,8 g Ethylendiamin, 13,5 g Isophorondiamin und 76 g Wasser in 5 Minuten zudosiert, anschließend die acetonische Polymerlösung in 951 g Wasser dispergiert und anschließend eine Mischung aus 6,7 g Isophorondiamin, 2,4 g Ethylendiamin und 51 g Wasser zudosiert und dann das Aceton im leichten Vakuum abdestilliert. Es wird die erfindungsgemäße, praktisch lösemittelfreie Alkydharzdispersion 10), mit einem Festkörpergehalt von 37,7 %, einem pH-Wert von 8,2 und einer mittleren Teilchengröße von 124 nm erhalten.

Die Dispersionen 7) bis 10) werden wie oben beschreiben appliziert und ausgehärtet. Alle Dispersionen trocknen in weniger als 2 Stunden bei Raumtemperatur zu klaren, homogenen Filmen mit sehr gutem Verlauf und ohne störende Verfärbung auf. Folgende Prüfergebnisse wurden erhalten:

**Tabelle 3:**

| Alkydharzdispersion | Disp.7) | Disp.8) | Disp.9) | Disp. 10) |
|---|---|---|---|---|
| Filmhärte nach 1 Tag/4 Tagen/7 Tagen Trocknung bei RT [Pendelsekunden] | 63"/78"/104" | 52"/64"/84" | 39"/57"/96" | 74"/105"/109" |
| Filmendhärte [Pendelsekunden; nach 16 h Trocknung bei 50°C] | 112" | 100" | 108" | 116" |
| Wasserfestigkeit [24 h]; Note 5 = ohne Befund.; Note 0 = aufgelöst] | 5 | 5 | 5 | 5 |
| Ethanolfestigkeit * [30 Min. ]; Note 5 = ohne Befund, Note 0 = Oberfläche zerstört | 5 | 5 | 5 | 5 |
| BHMR [Note5 keine Beschädigung, 4 leichter Glanzverlust, 3 leichter Abrieb, 2 starker Abrieb, 1 = Oberfläche zerstört] | 4 | 4 | 4-5 | 3-4 |
| Glanz auf schwarzem Plexiglas (20° Glanz n. Gardner) | 84 | 84 | 86 | 83 |
| Haftung [ Note 5 = ausgezeichnete Haftung, Note 1 = keine Haftung] | 5 | 5 | 5 | 5 |

Damit hergestellte Klarlacke zeigen eine sehr gute Filmbildung, eine sehr gute Anfeuerung des Holzes und hohe Glanzwerte, sie trocknen in weniger als 2 Stunden und die erzeugten Filme weisen eine sehr gute Wasser- und Ethanolbeständigkeit auf. Die Schuhsohlenabriebbeständigkeit ist auf hohem Niveau. Der Lösemittelbedarf zur Filmbildung ist gering und die Art des Lösemittels ist frei wählbar, je nach Anforderungsprofil.

## Patentansprüche

1. Wässrige Polyurethan(PUR)-Alkydharzdispersionen, enthaltend Umsetzungsprodukte von
a) mindestens einem Alkydharz, welches mindestens 40 Gew.- % zur oxidativen Vernetzung mit Luftsauerstoff befähigten Fettsäuren eingebaut enthält,
b) mindestens einem, mindestens difunktionellen Polyisocyanat,
c) mindestens einem carboxy-/carboxylatfunktionellen und hydroxy- oder aminofunktionellen Hydrophilierungsmittel,
d) gegebenenfalls Diole und/oder Triole des Molekulargewichtsbereiches 62 bis 600 und
e) mindestens einem Diamin, gegebenenfalls in Kombination mit einem Triamin und/oder Aminoalkohol und
f) gegebenenfalls andere von a) bis e) verschiedene Komponenten.

2. Wässrige Polyurethan(PUR)-Alkydharzdispersionen gemäß Anspruch 1, **dadurch gekennzeichnet, dass** diese ein Verhältnis von Fettsäuregruppen (MG 280 g/Mol) zu Urethangruppen (MG 59 g/Mol) von 1 : 1,5 bis 4,5 aufweisen.

3. Wässrige Polyurethan(PUR)-Alkydharzdispersionen gemäß Anspruch 1, **dadurch gekennzeichnet, dass** das als Aufbaukomponente enthaltene Alkydharz a) eine Säurezahl von 6 bis 1 mg KOH/g aufweist und ein Umsetzungsprodukt aus
a1) mindestens einer Di- und/oder Tricarbonsäure bzw. deren Anhydrid, bevorzugt eine Mischung aus a11) mindestens einer aromatischen Dicarbonsäure bzw. deren Anhydrid und a12) mindestens einer linearen, aliphatischen Dicarbonsäure,
a2) mindestens einem Di-, Tri- und/oder Tetraol, bevorzugt mindestens einem Triol,
a3) mindestens einer Monocarbonsäure, bestehend zu mindestens 90 Gew.-% aus Fettsäuren, die zur oxidativen Vernetzung mit Luftsauerstoff befähigte Doppelbindungen enthalten, ist.

4. Wässrige Polyurethan(PUR)-Alkydharzdispersionen gemäß Anspruch 1, **dadurch gekennzeichnet, dass** die Polyisocyanatkomponente b) mindestens 30 bis 95 Gew.-% cycloaliphatische Diisocyanate und 5 bis 70 Gew.-% aromatische Di- bzw. Polyisocyanate enthält.

5. Wässrige Polyurethan(PUR)-Alkydharzdispersionen gemäß Anspruch 1, **dadurch gekennzeichnet, dass** die Komponente e) eine Mischung aus mindestens einem linearaliphtischen Diamin und/oder Triamin e1) und mindestens einem cycloaliphatischen Diamin e2) enthält.

6. Verfahren zur Herstellung der wässrigen PUR-Alkydharzdispersionen gemäß Anspruch 1, **dadurch gekennzeichnet, dass** die Komponenten a) bis d) und gegebenenfalls f) in einem oder mehreren Reaktionsschritten zu einem isocyanatfunktionellen Alkydharz umgesetzt werden, wobei Lösemittel und Neutralisationsmittel vor, während und/oder nach der Reaktion zugesetzt werden, dann eine Kettenverlängerung mit Komponente e) in organischer Lösung durchgeführt und anschließend in oder mit Wasser dispergiert wird.

7. Verfahren zur Herstellung der wässrigen PUR-Alkydharzdispersionen gemäß Anspruch 6, **dadurch gekennzeichnet, dass** die Komponenten a) bis d) und gegebenenfalls f) in einem oder mehreren Reaktionsschritten zu einem isocyanatfunktionellen Alkydharz umgesetzt, wobei Lösemittel vor, während oder nach der Reaktion zugesetzt und das Neutralisationsmittel während oder nach der Reaktion zugegeben wird, anschließend eine erste Kettenverlängerung mit einem Teil der Komponente e) in organischer Lösung durchgeführt und dann eine zweite Kettenverlängerung mit dem Rest der Komponente e) während oder nach dem Dispergierschritt durchgeführt wird, wobei das Mengenverhältnis der eingesetzten Komponenten e) des ersten zum zweiten Kettenverlängerungsschritt 0,3 zu 1 bis 6 zu 1 beträgt.

8. Verfahren zur Herstellung der wässrigen PUR-Alkydharzdispersionen gemäß Anspruch 6 oder 7, **dadurch gekennzeichnet, dass** das Lösemittel während oder nach dem Dispergierschritt destillativ abgetrennt wird.

9. Verfahren zur Herstellung der wässrigen PUR-Alkydharzdispersionen gemäß Anspruch 6, **dadurch gekennzeichnet, dass** Trocknungsbeschleuniger zugesetzt werden.

10. Bindemittelkombinationen, enthaltend wässrige PUR-Alkydharzdispersionen gemäß Anspruch 1 und Vernetzerharze auf Basis von Polyisocyanaten und oder Aminovernetzerharzen.

11. Verwendung der wässrigen PUR-Alkydharzdispersionen gemäß Anspruch 1 zur Herstellung von Klarlacken, pigmentierten oder nicht pigmentierten Beschichtungen auf mineralischen bzw. keramisch Untergründen und Materialien, Beton, Hartfaserwerkstoffe, metallische Untergründe, Kunststoffe, Papier, Pappe, Verbundwerkstoffe, Glas, Porzellan, Textil und/oder Leder.
